# EUROPEAN PATENT APPLICATION

(11) **EP 4 439 476 A1**
(43) Date of publication of application: **02.10.2024**
(21) Application number: 23165410.4
(22) Date of filing: 30.03.2023
(51) Int. Cl.: G06T 19/20, G06T 15/20

(54) **METHOD AND SYSTEM FOR SURGICAL PLANNING**

(71) Applicant: Koninklijke Philips N.V., 5656 AG Eindhoven (NL)
(72) Inventor: GEURTS, Lucas Jacobus Franciscus, Eindhoven (NL); PLUYTER, Jon Ragnar, Eindhoven (NL); PEETEN, Judith, 5656AG Eindhoven (NL); RUIJS, Laura, Eindhoven (NL); JACOBS, Igor, Eindhoven (NL)
(74) Representative: Philips Intellectual Property & Standards

(57) **Abstract**

Some embodiments are directed to a method enabling surgical planning using a 3D model. A visibility specification may be determined for displaying the 3D model, the visibility specification comprising a rendering mode for the multiple segmented anatomic structures in the 3D model, wherein the rendering mode for the multiple segmented anatomic structures may be determined from the anatomic structure of interest and the zoom level.

## Description

### FIELD OF THE INVENTION

The presently disclosed subject matter relates to a method enabling surgical planning using a 3D model, a display device, and a computer readable medium.

### BACKGROUND OF THE INVENTION

Pancreatic cancer remains one of the deadliest cancers worldwide, with a survival rate of only one in ten patients exceeding five years following diagnosis. Early detection and improved surgical planning are important to optimize patient outcomes.

Currently, the assessment of resectability and the determination of a surgical strategy for pancreatic cancer involve the use of medical images, such as radiological CT images. 3D models derived from such medical images allow surgical planning, placing surgeons in an optimal position to deliver the best possible care to their patients. Both traditional and AI models are capable of providing pixel-based segmentations of anatomical structures within medical images.

Nonetheless, the utilization of 3D models introduces certain challenges within clinical workflows, as they present an almost infinite array of perspectives on patient anatomy, necessitating substantial user interaction. Acquiring the appropriate perspective in a 3D model is a dynamic process, influenced by a combination of internal factors, such as user intent, and external factors, like the type of anatomical structure being examined. Clinical planning is time-sensitive, so the time and effort required to identify the correct perspective can hinder the adoption of image-based segmentations and 3D models in routine clinical practice. Because getting a good view from a conventional system is hard, clinicians do not get the full understanding of a case, that is possible from 3D viewing.

Consequently, there is a need to streamline this process while maintaining accuracy and precision to enhance patient care.

### SUMMARY OF THE INVENTION

A method enabling procedural planning, such as biopsies and surgery, using a 3D model, a display device, and a computer readable medium are provided as described in the accompanying claims. Specific embodiments of the invention are set forth in the dependent claims.

In an embodiment, surgical planning using a 3D model is enabled. A 3D model may be generated from one or more medical images. A visibility specification is determined for displaying the 3D model. The visibility specification comprises a rendering mode for the multiple anatomic structures in the 3D model. The rendering mode may be determined from an anatomic structure of interest and a zoom level. Other information may be taken into account when determining the visibility specification. A rendering mode indicates the visibility of the structure, e.g., by specifying one or more of a structure color, structure texture, structure transparency, inside or outside perspective. The 3D model can then be displayed on a display, e.g., an autostereoscopic display or a 2D display.

In addition to the 3D model other relevant data may be shown, such as meta-data, including, e.g., labels or measurements. As the zoom level changes, the information displayed may also change to show relevant information. For example, when the zoom level is higher, the information might be different and more detailed, then when the zoom level is lower. For example, as a user zooms in on a tumor, relevant measurements may be shown, which may be absent in a zoomed out version.

Embodiments allow implementing a dynamic method to view the 3D model. As one or more of the perspective, zoom level, visualization settings per structure may be selected by the system, a user is presented with a display that enables improved surgical planning. A better visibility of important aspects, e.g., a tumor, organ, or the like, is obtained without the need for manual adjustments. The method is dynamic as the 3D model displaying may be updated by the user, e.g., by providing new inputs. In an embodiment, the display may be further adjusted using conventional 3D display controls; for example, a user may make small shift to the camera viewpoint, or the like.

The visualization model may be driven by a combination of inputs both internal to the user, e.g., user intent, user preference, and external to the user, e.g., type of anatomy, clinical protocol. For example, user intent may be expressed as the information search of the user, which may be expressed as a user goal, e.g., contact search versus aberrant blood vessel search, or as workflow information, e.g., a workflow stage. For example, the system may switch from a first visibility specification to a second visibility specification, e.g., due to new inputs, e.g., a new zoom level, a new anatomical structure of interest, etc. The display of the 3D model may then be updated according to the new, second, visibility specification. In an embodiment, the transition is done using a video sequence. For example, in an embodiment, a video sequence is generating moving from a first visibility specification to a second visibility specification. The video sequence may be shown when the switch between the first visibility specification to the second visibility specification is made.

A system for enabling surgical planning is an electronic device, e.g., a computer. The system may comprise a combination of software running on an electronic device. The system may optionally comprise a display for displaying the 3D model in a 3D view according to the visibility specification.

Some embodiments are directed to a method enabling surgical planning using a 3D model. A visibility specification may be determined for displaying the 3D model, the visibility specification comprising a rendering mode for the multiple segmented anatomic structures in the 3D model, wherein the rendering mode for the multiple segmented anatomic structures may be determined from the anatomic structure of interest and the zoom level.

A person skilled in the art will appreciate that the method may be applied to multidimensional image data, e.g., to two-dimensional (2D), three-dimensional (3D) or four-dimensional (4D) images, acquired by various acquisition modalities such as, but not limited to, standard X-ray Imaging, Computed Tomography (CT), Magnetic Resonance Imaging (MRI), Ultrasound (US), Positron Emission Tomography (PET), Single Photon Emission Computed Tomography (SPECT).

A further aspect is a method for enabling surgical planning. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium. Another aspect of the presently disclosed subject matter is a method of making the computer program available for downloading.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Fig. 1 schematically shows an example of an embodiment of a display device,
Fig 2a schematically shows an example of an embodiment of a display device, Fig.2b schematically shows an example of an embodiment of visibility specifications,
Fig 2c schematically shows an example of an embodiment of a contact analyzer,
Fig 2d schematically shows an example of an embodiment of a workflow manager,
Fig.3a-3f show screenshots of an embodiment showing a visualization of a 3D model,
Fig.4 schematically shows an example of an embodiment of a method enabling surgical planning using a 3D model,
Fig.5a schematically shows a computer readable medium having a writable part comprising a computer program according to an embodiment,
Fig.5b schematically shows a representation of a processor system according to an embodiment.

### Reference signs list

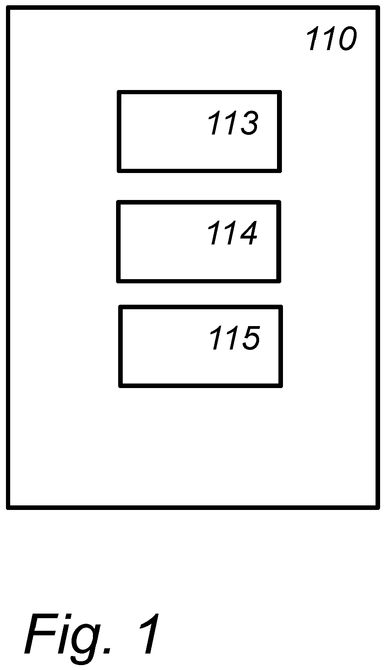

The following list of references and abbreviations corresponds to Figs. 1-3f, and is provided for facilitating the interpretation of the drawings and shall not be construed as limiting the claims.
- 110: a medical image display device
- 113: a processor system
- 114: storage
- 115: communication interface

- 210: a segmentation unit
- 211: one or more medical images
- 212: a 3D model

- 220: visibility manager
- 221: a zoom level
- 222: an anatomical structure of interest
- 223: visibility specifications
- 225: a visibility of the anatomical structure of interest
- 226: a visibility of a further anatomical structure
- 230: presentation state manager
- 231: a presentation state
- 240: a renderer
- 241: a display

- 250: contact analyzer
- 251: a further anatomical structure
- 252: contact location

- 260: workflow manager
- 261: surgical planning information
- 311, 312: a tumor at different certainty thresholds
- 321, 322: a blood vessel
- 331, 332: a contact at different certainty thresholds
- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Fig. 1 schematically shows an example of an embodiment of a display device 110. Display device 110 may be configured to load images resulting from an imaging device. For example, display device 110 may be a stand-alone device, e.g., as a radiology workstation, or other image viewing workstation. As a stand-alone device it may not be directly connected to the imaging device from which the images originated, apart from loading images over a computer network that originated from said imaging device.

Display device 110 could be part of an imaging system further comprising an imaging device configured to image a human anatomy, e.g., a human body. Display device 110 is configured to enable surgical planning using a 3D model. For example, device 110 may be used to assist surgeons in visualizing and planning surgical procedures on a patient.

For example, an embodiment may be implemented as a software feature, e.g., as an extension, in a radiology workstation or in a visualization software package. A display device enables fast navigation through 3D models of medical image segmentations. The navigation and/or visualization may be personalized.

For example, visualization may be improved by selecting a viewing angle, e.g., camera angle, and by selectively changing the visibility of anatomical structures. Changing the visibility may be done by removing a structure, making the structure transparent, rendering the structure in a different manner, e.g., as mesh or solid, changing the color or texture of a structure, e.g., selectively greying structures, etc. The anatomical structures may be, for example, organs, or blood vessels.

These segmentations can be of any structure. For example, good results have been obtained in an experimental set-up that visualizes the pancreas and surrounding blood vessels, according to an embodiment. Improved navigation using a 3D model is particularly useful for visualizing and planning surgery for pancreatic cancer. Pancreatic cancer often presents complex surgical challenges due to the pancreas's location, as it is surrounded by vital blood vessels and other important structures. Experiments indicate an improved planning of the surgical intervention, and a better understanding by the user of the specific three-dimensional lay out of the particular patient.

For example, a patient with pancreatic cancer may require complex surgery that involves removing, e.g., part of the surrounding blood vessel, and so on. In order to plan and execute this procedure, surgeons should have a clear understanding of the tumor's size, location, and its relationship to surrounding structures.

Using a 3D model based on the patient's medical images, surgeons can visualize the pancreas, the tumor, and the surrounding blood vessels, bile ducts, and other organs. This detailed visualization can help surgeons determine the most appropriate surgical approach, the extent of the resection required, and any potential challenges or complications that may arise during the procedure.

By providing a more accurate representation of the patient's anatomy, the 3D model may contribute to better surgical planning, leading to improved outcomes, which may include reduced operative time, and fewer risks of complications in surgery, e.g., pancreatic cancer resection.

In addition to the pancreas, embodiments may be applied to other organs. For example, surgeons may use a 3D model to visualize the heart structures and plan for procedures such as coronary artery bypass grafting, valve replacements, or congenital heart defect repairs. A 3D model can help visualize liver tumors, blood vessels, and bile ducts, enabling surgeons to plan for liver resections or liver transplants more accurately. Surgeons can use 3D models to visualize kidney tumors, renal blood vessels, and veins, allowing for better planning in procedures such as partial or total removal of the kidney, or kidney transplants. Neurosurgeons may use a 3D model to visualize the complex structures of the brain, including tumors, blood vessels, and functional areas, aiding in planning for procedures like tumor resections, aneurysm repairs, or deep brain stimulation. A 3D model of the lungs can help surgeons visualize lung tumors, airways, and blood vessels, allowing for better planning of lung resections, biopsy procedures, or lung transplants. Orthopedic surgeons can use 3D models to visualize bone structures, fractures, or joint deformities, which can be helpful when planning procedures such as joint replacements, fracture repairs, or spinal surgeries.

3D models may be used in a catheterization laboratory, also known as a cathlab, e.g., to visualize the blood vessels and chambers of the heart, possibly during the treatment, e.g., of stenosis or other abnormality. For example, the 3D model may be shown while using a steerable catheter in a procedure. For example, crucial spots may be zoomed in on, using an embodiment. The 3D model may be obtained and displayed live, e.g., during the procedure. On the other hand, a 3D model could be used preprocedural, e.g., to plan the trajectory for the catheter.

In each of the above examples, the 3D model may be visualized using an embodiment. For example, a visibility specification may be determined for each of the anatomical structures in the 3D model. The visibility specification may be determined at least from a zoom level and an anatomical structure of interest.

Generally speaking, embodiments may provide an improved planning for tumor resection surgery. Potentially offering several advantages over existing technologies. For example, it may be expected that an embodiment could lead to reduced operating time, reduced complication, increased efficiency of planning, and thus reduced costs, since a user of the embodiment is offered a better view that transfers information to him/her better, and/or finds an appropriate view for the current task faster. While the actual outcomes will depend on various factors and specific implementations, embodiments have the potential to significantly contribute to in-body procedures, such as surgery and biopsy. Tumor resection surgery being a particularly advantageous field, as 3D problems resulting from anatomical structures near the anatomical structure of interest, e.g., the tumor, are particularly relevant there.

Surgical planning using 3D models is particularly useful in oncology, e.g., interventional oncology, e.g., to assess tumor resectability and determine the surgical strategy. For example, the extent of vascular involvement can be assessed using a 3D model. Surgical planning for cancer resection may include, e.g., pancreatic cancer or other abdominal cancers, etc. For example, a surgeon may dissect and remove tumor tissue, which may involve the removal of parts of affected organs or tissues. It is important that the specific anatomy of the patient is taken into account, e.g., the layout of blood vessels.

Display device 110 may comprise a processor system 113, a storage 114, and a communication interface 115. Storage 114 may be, e.g., electronic storage, magnetic storage, etc. The storage may comprise local storage, e.g., a local hard drive or electronic memory. Storage 114 may comprise non-local storage, e.g., cloud storage. In the latter case, storage 114 may comprise a storage interface to the non-local storage. Storage may comprise multiple discrete sub-storages together making up storage 114.

Storage 114 may be non-transitory storage. For example, storage 114 may store data in the presence of power such as a volatile memory device, e.g., a Random Access Memory (RAM). For example, storage 114 may store data in the presence of power as well as outside the presence of power such as a non-volatile memory device, e.g., Flash memory. Storage 114 may comprise a non-volatile nonwritable part, e.g., ROM, e.g., storing part of the software.

In the various embodiments of communication interfaces 115, the communication interfaces may be selected from various alternatives. For example, the interface may be a network interface to a local or wide area network, e.g., the Internet, a storage interface to an internal or external data storage, an application interface (API), etc.

Device 110 may communicate internally, with other systems, with other devices, external storage, input devices, output devices, and/or one or more sensors over a computer network. The computer network may be an internet, an intranet, a LAN, a WLAN, etc. The computer network may be the Internet. Device 110 comprises a connection interface which is arranged to communicate with other devices. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 115 may be used to send or receive digital data, e.g., medical images, surgical planning information, and zoom levels.

Display device 110 may have a user interface, which may include well-known elements such as one or more buttons, a keyboard, display, touch screen, controllers, etc. In an embodiment display device 110 is configured for gesture detection, e.g., in air gestures, allowing control of device 110 through gestures. For example, device 110 may be connected to a camera for observing said gestures. The user interface may be arranged for accommodating user interaction for performing the surgical planning and visualization using the 3D model.

The execution of device 110 may be implemented in a processor system. Device 110 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Device 110 may comprise multiple processors. A processor circuit may be implemented in a distributed fashion, e.g., as multiple sub-processor circuits. For example, device 110 may use cloud computing.

Typically, the display device 110 comprises a microprocessor which executes appropriate software stored at the device; for example, that software may have been downloaded and/or stored in a corresponding memory, e.g., a volatile memory such as RAM or a non-volatile memory such as Flash.

Instead of using software to implement a function, device 110 may, in whole or in part, be implemented in programmable logic, e.g., as field-programmable gate array (FPGA). The device may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, client device 110 may comprise circuits, e.g., for cryptographic processing, and/or arithmetic processing.

In hybrid embodiments, functional units are implemented partially in hardware, e.g., as coprocessors, e.g., graphic coprocessors, and partially in software stored and executed on the device.

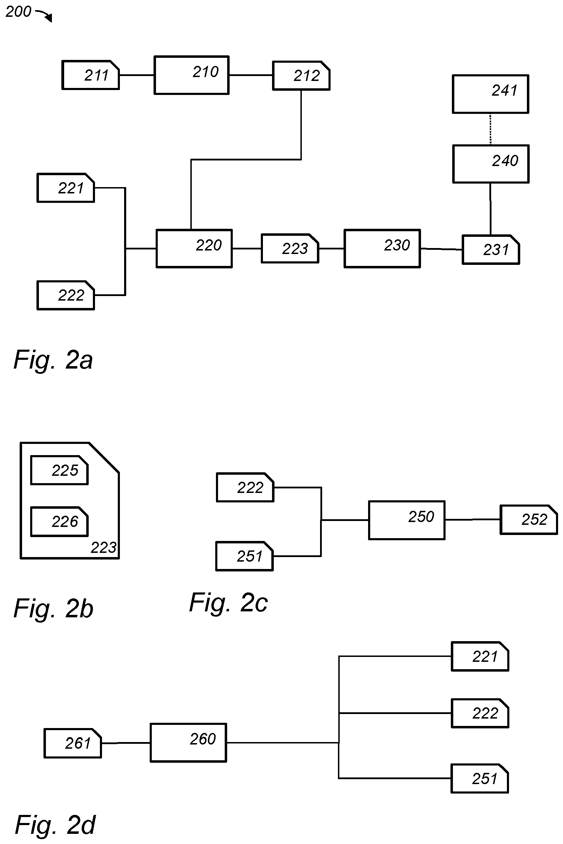

Fig. 2a schematically shows an example of an embodiment of a display device 200. An embodiment, such as display device 200, may be used for surgical planning using a 3D model.

For example, the surgical planning may comprise assessing tumor resectability and assessing vascular involvement. Surgical planning may comprise planning the surgical operation. Typically, surgical planning would be performed by a surgeon, though embodiments may be operated by any user. For example, users may include assistants, nurses, clinicians, and the like.

To generate a 3D model 212, the device obtains one or more medical images 211. System 200 comprises a segmentation unit 210 configured to identify multiple anatomic structures in the one or more medical images 211 and to generate a 3D model 212 comprising multiple segmented anatomic structures therefrom. The anatomic structures may include organs, blood vessels, bile ducts, and the like.

Segmentation unit 210 may identify the multiple anatomic structures using a segmentation algorithm, possibly using AI. The segmentation algorithm may further create uncertainty margins of the segmentation, which could lead to different sizes of the tumor. A segmentation may be done automatically by a computer-implemented segmentation algorithm, but may also be obtained from manual segmentation by the user. The segmentation may also be hybrid between algorithmic and manual, for example, where segmentations are adapted.

Segmentation unit 210 may be configured to integrate anatomical segmentation information from multiple sources to generate 3D model 212. For example, the multiple sources may include one or more of different imaging techniques, scan phases, scan sequences, and algorithms.

For example, multiple imaging techniques may be used to capture different types of images of the same area of the body. For example, a patient may undergo both a computed tomography (CT) scan and a magnetic resonance imaging (MRI) scan to capture different types of images that can be used to provide a more complete picture of the anatomy. Various scan phases may be used, e.g., the timing of the image acquisition relative to a specific physiological event, such as the injection of a contrast agent. A CT scan may be acquired in several phases after contrast agent injection to visualize the arterial and venous phases of blood flow. A scan sequence refers to the specific settings used during the acquisition of an imaging modality, such as the repetition time (TR) and echo time (TE) used in MRI or the tube current and voltage used in CT. Different sequences can be optimized to provide different types of contrast or sensitivity to specific types of tissue or pathology, such as T1-weighted, T2-weighted, or diffusion-weighted imaging in MRI.

In the context of image segmentation on medical images, both traditional models and Artificial Intelligence (AI) models are able to provide pixel-based segmentations of anatomical structures, and to integrate anatomical segmentation information from multiple sources. The 3D model may be pixels based, which includes the 3D variant sometimes called voxels, or may be polygon based. For example, pixels may be tagged as belonging to a particular anatomical structure. For example, anatomical structure may be implemented as an area segmented by polygons, e.g., triangulated. For example, a list of anatomical structure may include the pixels that belong to the anatomical structure or the polygons that form its boundary. When referring to a pixel in a polygon based 3D model, then this term may be interpreted as a point in the 3D model space.

Instead of comprising a segmentation unit 210, system 200 may also use an external segmentation unit or receive the 3D model directly.

System 200 comprises a visibility manager 220 configured to determine visibility specifications 223 for the anatomical structures in the 3D model. For example, visibility manager 220 may be configured to obtain surgical planning information comprising at least an anatomic structure of interest 222, and to obtain a zoom level 221 for the 3D model. Based on at least the anatomic structure of interest and the zoom level, visibility specifications are derived. A visibility specification indicates the level of visibility in a rendering of the 3D model of the anatomical structures in the 3D model.

The anatomical structure of interest 222 may be entered by a user, or retrieved from an external system, e.g., a surgical information system, e.g., a database, or the like. Anatomical structure of interest may be implemented as a pointer to a structure in the 3D model, e.g., as an index in a list of structures in the 3D model, or as a pixel inside the structure.

Zoom level 221 may be obtained from a user of system 200. Zoom level 221 may also be obtained from a workflow manager, which is discussed below. For example, the workflow manager may indicate different zoom levels to be applied in a sequence. A user can follow the indicated zoom levels or deviate from it.

For example, a visibility specification for a low zoom setting may have a visibility specification indicating a high visibility of at least part of the anatomical structures. For example, a visibility specification for a high zoom setting, may have a visibility specification indicating that at least part of the anatomical structures has reduced visibility to increase visibility of the anatomical structure of interest. For example, the 3D model may comprise a list of anatomical structures, wherein a visibility specification may be indicated. For example, pixels of the 3D model may be tagged with a visibility specification. For example, anatomical structures may be tagged with a visibility specification.

For example, in an embodiment, a segmented anatomic structure is a blood vessel, the visibility specification for the blood vessel may be solid for a zoom level below a threshold, and non-solid for a zoom level above a threshold. For example, non-solid rendering may be a mesh, this facilitates easy assessment of tumor-vessel contact.

Based on the input parameters, the program would determine a visibility specification for each anatomical structure within the 3D model. This could involve rendering certain structures as solid, others as meshes, or even removing some structures altogether. The visibility specification would be designed to provide a view of the structure of interest while still maintaining a coherent representation of the surrounding anatomy. The view facilitating, e.g., searching for contact, searching for vessels, surveying, and the like.

The visibility specification may comprise a rendering mode for the anatomic structures. The rendering mode may comprise one or more of the list: structure color, structure texture, structure transparency, inside or outside perspective, shading. A shader is a computer program that calculates the appropriate levels of light, darkness, and color during the rendering of a 3D model.

Visibility manager 220 can follow various approaches.

For example, visibility rules may be defined in visibility manager 220. The set of rules determine default visibility specifications for various anatomical structures. The default rule may be based on factors such as their relevance to the structure of interest, their proximity, and their functional importance. These rules can be created with input from experienced clinicians to ensure that the program's visibility specifications align with real-world surgical planning needs. The default rules may be recorded in a table, e.g., indexed by zoom level and/or anatomy structure type. A user of system 200 may create exceptions to the rules, based on his/her personal preferences. For example, the default way to reduce visibility may be to render a structure as a mesh, whereas another user may prefer rendering as semi-transparent. Such personalized rules may be recorded on a per user basis, e.g., in a user profile.

Visibility manager 220 may comprise a machine learnable model receiving as input a combination of inputs both internal to the user, e.g., user intent, user preference, and external to the user, e.g., type of anatomy, clinical protocol. For example, the input may comprise zoom level and an anatomic structure of interest, e.g., the pancreas. The machine learnable model may be trained by recording interactions with a 3D model that allows changing visibility of anatomical structures by expert users, e.g., surgeons. The machine learnable model may comprise a neural network, such as a convolutional network, U-net, and the like. The machine learnable model may comprise a decision tree, random forest, or support vector machine. Interestingly, the machine learnable model may quite small; for example, inputs to the machine learnable model may comprise precomputed parameters instead of the image; for example, the inputs may comprise a proximity to the anatomic structure of interest, a zoom level, and possibly surgical information, e.g., type of surgery, and/or user intent information, e.g., workflow information, e.g., a workflow stage, or contact search versus aberrant blood vessel search. The machine learnable model may be applied to each anatomical structure, or to each pixel, or to each part in a rasterization of the 3D space, etc.

Machine learning and default rules may be combined. Rule-based logic and the machine learning model's predictions may be combined to determine the final visibility specifications for each anatomical structure. The rules can serve as a foundation, while the machine learning model refines the visibility specifications based on its learned understanding of the relationships between different anatomical structures.

By combining rule-based logic, machine learning, and/or user customization, the program can effectively determine the most suitable visibility specifications for each anatomical structure within the 3D model, ultimately enhancing the surgical planning process.

For example, confidence scores may be calculated for each anatomical structure from at least one of the rule-based logic visibility specification and the machine learning model's visibility specification. This score can be based on factors such as the reliability of the rules, the accuracy of the machine learning model, and the similarity between the current case and the training data. Based on the confidence scores the visibility specifications may be merged. For example, the rule-based logic and machine learning visibility specification may be combined using a weighted average based on one or both of their confidence scores. This ensures that both methods contribute to the final visibility specification based on confidence, with more reliable specifications having a stronger influence. If necessary, additional thresholds or post-processing steps may be applied to the combined visibility specifications to ensure they meet specific requirements or constraints, such as maintaining a certain level of clarity or minimizing occlusion.

Fig. 2b schematically shows an example of an embodiment of visibility specifications 223. Visibility specifications 223 comprise a visibility of the anatomical structure of interest 225, and a visibility of a further anatomical structure 226.

For example, visibility specifications 225 may specify a solid rending style, e.g., for the organ that is to be operated upon. For example, the visibility specifications 226 may specify a mesh rending style, e.g., for blood vessels near the anatomical structure of interest. For example, visibility specifications 223 may comprise a list of the anatomical structures in the 3D model with a visibility specification for each structure. Multiple visibility specification may be applied to a single structure. For example, a part of a blood vessel may be solid, while another part is transparent.

Returning to Fig. 2a. System 200 comprises a presentation state manager 230. Presentation state manager 230 is configured to supply further information needed to render the 3D model. A presentation state is optional, an embodiment could implement aspects of the presentation model in the visual specification manager 220, or in the renderer 240, as desired. Nevertheless, the division in a visibility state and a presentation state has advantages as it allows a higher level of organization in the visual specification manager 220, the details of which are then implemented in the presentation state manager 230 on a lower level, suitable for the render.

An important component whose selection may be implemented by presentation state manager 230 is to select a viewing angle, e.g., a camera angle. Selecting a viewing angle on patient anatomy conventionally requires a lot of user interaction, thereby introducing additional complexity into time-pressured clinical workflows. Finding the right perspective requires time and is difficult, which can affect the willingness to adopt the image-based segmentations and 3D models into routine clinical practice. A typical human experiments with the controls for a prolonged time until a perspective has been found that allows him/her to see the relevant structure. The reason this takes a long time, is because it is a difficult selection from a large number of options. It was found that automated perspective selection, e.g., including a viewing angle, performed much quicker, shortening planning time, and increasing the amount of anatomical data that can be transmitted to the user in a given time. Automated perspective selection is especially advantageous in combination with automated selection of visibility specifications.

Obtaining the right perspective in a 3D model may be dynamic, e.g., depending on user internal factors, e.g., user intent, e.g., surgical planning information, and external factors, e.g., the type of anatomical structure. A dynamic method to view the 3D model, e.g., with one or more of a perspective, zoom level, visualization settings per structure, and possibly visualization of meta-data, allows faster analysis of the anatomical information. In an embodiment, a user retains control over system selected presentations states, e.g., viewpoints, and/or, visibility specifications, e.g., by allowing the user to override or modify them.

For example, a first presentation state may enable showing the anatomic structure of interest, and surrounding anatomical structures, in particular, blood vessels, while a second presentation state may enable showing, say an in-vessel perspective near the anatomical structure of interest. The perspective could also be an outside-vessel perspective.

The viewing angle or camera position is the orientation under which the 3D model is displayed. This refers to the specific perspective from which the model is being viewed, such as the angle and position of the camera relative to the model. The presentation state may also comprise light condition, light positions, type of lights, light angles, etc. Light types may include, e.g., directional light, ambient light, point light, spotlight, etc.

For example, light conditions may depend on the zoom level. For example, the light could be inside the vessel when taking an inside-vessel perspective.

Presentation state manager 230 may also or instead further define the specifications at a level suitable for a rendering. For example, the visibility specification provided by visibility manager 220 may be on a high level, only indicating say, a mesh texture. Presentation state manager 230 may apply the visibility specification to the 3D model, e.g., applying a mesh, or a texture, to the corresponding anatomical structure.

In an embodiment, the presentation state is determined according to a visibility specification. The visibility specification indicates the visibility of the anatomical structure of interest and/or of contact locations between the anatomical structure of interest and/or of a further anatomical structure. For example, contact locations, e.g., a set of contact pixels, or polygons, or a surface, etc., may indicate where the anatomical structure of interest, e.g., a tumor, contact a further anatomical structure, e.g., a blood vessel. The contact locations may have a different visibility specification than the anatomical structure of interest and the further anatomical structure.

The visibility specification may have been determined from the surgical planning information, etc.

Determining the presentation state according to a visibility specification may comprise optimizing the presentation state subject to the visibility specification. For example, viewing angle and lighting conditions could also be specified in visual specifications 223.

System 200 comprises a renderer 240. The renderer is configured to display the 3D model in a 3D view according to the visibility specification, and optionally, a presentation state. The visibility specification may also include the definition of a camera, including one or more camera parameters such as camera position, zoom level of the model, light positions, viewing angle, field of view, clipping, and so on. These could also be specified in a presentation state, which may also or instead be supplied to the renderer.

Like other visibility specifications, camera and light parameters may change dynamically, e.g., as inputs change. For example, as the user zooms in, e.g., camera and/or light parameters may adapt. In addition to visibility specifications, other information shown may also change, for example, more 3D anatomy information, e.g., labels, measurements, may be shown as the zoom level increases.

The output of the renderer 240 may be displayed on display 241. Display 241 may be part of system 200, or may be an external component.

Display 241 may be a 3D display. Displaying a 3D anatomical model on an autostereoscopic display, e.g., a holographic display is particularly advantageous. The 3D display could be an external display, but which is synchronized with the workstation to which it is connected. A 3D display further enables users to gain an instant and intuitive understanding of the patient's anatomy from the 3D perspective with which they are most familiar.

The display may be a medical image viewing monitor. The display may be a medical dicom image viewing area or display. The display could also comprise other 3D techniques, e.g., Augmented Reality, Virtual Reality. The display could be a 2D display, displaying a 3D rendering.

Multiple views of the 3D model may be shown, which may be linked to each other. For example, a first view may be shown on a first display, which may be a 2D display; a second view may be shown on a second display, which may be a 3D display. For example, as you zoom in the visibility specification may change and could also apply to both the first and second view. The visibility specifications may be the same for the multiple views, or they may be different. For example, in the first view segmentations may be hidden or uncertainty segmentation boundaries may be shown, which are not hidden or not shown in the second view. Depending on the camera position, a different image could be shown on the displays, e.g., displaying the most relevant slice.

Fig. 2c schematically shows an example of an embodiment of a contact analyzer 250. The contact analyzer uses as input the anatomical structure of interest 222, and a further anatomical structure 251; for example, the anatomical structure of interest 222 may be a tumor, and the further anatomical structure 251 may be a blood vessel. Contact analyzer 250 determines locations 252 where the two structures 222 and 251 make contact. For example, contact locations may be implemented as a list of structure-parts, or pixels, in the 3D model or its 3D segmentation. The contact locations may be a 3D area, segmented by polygons, e.g., having a boundary comprising polygons, e.g., triangulated. Optionally, the type of contact may also be classified. For example, a tumor may push against the blood vessel, or may grow into the blood vessel. There are conventional algorithms to compute contact between two anatomical structures.

The contact between the two structures may be used for various reasons in the rest of system 200, e.g., visibility manager 220 or presentation state manager 230.

For example, contact points may be used to determine a viewing angle. For example, after determining one or more parts of the anatomic structure of interest where the anatomic structure of interest contacts another anatomic structure; for example, where a tumor, or organ contacts a blood vessel, bile duct or the like. For example, a plane may be fitted to the determined part, from which one or more viewing angles may be derived. For example, a viewing angle may be orthogonal to the plane, or parallel to the plane. A user may toggle between multiple determined viewing angles.

If multiple parts of the anatomic structure of interest are determined where the anatomic structure of interest contacts another anatomic structure, e.g., contacts, or grows into, then it may be appropriate to research more parts in detail. For example, the multiple parts may be rated for severity, e.g., depending on the extent of the part. The most severe part may then be selected. For example, a viewing angle may be selected specifically for each selected part.

If it turns out that the two structures do not contact each other, and are not near then one of the structures may be specified as not visible, or transparent, or greyscale. Near may be defined as near to within a certain range.

Visibility specification also provides a good way to deal with uncertainty in the model. For example, a visibility specification may define a different visibility for parts of an anatomical structure based on the certainty that the corresponding pixels belong to the anatomical structure. For example, segmentation unit 210 may assign a certainty that a pixel is part of a tumor, or of some other anatomical structure. The same may be used for contact points. Contact analyzer 250 may assign a likelihood that a pixel from a first structure is contacting a second structure.

A first visibility specification may be assigned to pixels below a certainty threshold, e.g., pixels that are not certain to be part of the structure or the contact, and a second visibility specification may be assigned to pixels above the certainty threshold, e.g., pixels that are almost certain to be part of the structure or the contact. Uncertainty information may be obtained from segmentation unit 210, or from the contact analyzer 250, e.g., produced by a segmentation algorithm, or a contact determining algorithm.

For example, the different visibility specification may be a different color. This will typically show as layers with different uncertainty of the anatomic structure of interest, or of surrounding anatomical structures, in particular, blood vessels.

In an embodiment, pixels having an uncertainty level below the threshold are not shown if the zoom level is below a threshold, but are shown if the zoom level is above the threshold.

Communicating certainty through visualization style turned out to be a very effective way to transfer this knowledge to a user, e.g., a surgeon. It is an unfortunate reality that one cannot be entirely sure of the anatomical configuration without physically opening the patient body. Showing different certainties in a single visualization enables a surgeon to plan the surgery while keeping in mind less likely, but possible situations. Other ways of communication uncertainty did not show this advantage. For example, showing two separate visualizations with different segmentations based on different thresholds for certainty enables one to make different plans for these two possibilities, but showing the two options in one picture, allows one to make a single plan that takes into account the eventualities that may be encountered.

Fig. 2d schematically shows an example of an embodiment of an optional workflow manager 260.

Workflow manager 260 receives as input surgical planning information 261, e.g., the anatomical structure of interest, the type of planned surgery, etc. The workflow manager guides the user through a series of visualizations that helps the surgeon to learn the anatomical configuration, and to make an appropriate plan. For example, the zoom level may be determined from a workflow, instead of from the user. The workflow may indicate different zoom levels to be applied in a sequence. For example, the sequence may prescribe first a low zoom level, then a high zoom level. The workflow may also prescribe other aspects, e.g., in-vessel or out-vessel perspective.

An embodiment may comprise one or more of a component that generates a 3D model and shows it on an output device, e.g., regular display, holographic display, virtual reality; a component that captures user input, e.g., user intent, personal preferences, 3D model zoom level; a component that captures inputs external to the user, e.g., type of anatomical structure, clinical protocols; a component that hosts an array of 3D model presentation states, e.g., 3D model viewpoint and zoom level, texture, e.g., solid/ mesh structure of anatomy, inside/ outside organ perspective; a component that matches/ translates a combination of inputs with an optimized set of output(s); a component that allows the user to navigate a set of optimized outputs and indicate and learn the system personalized preferences, e.g., adherent to personal preferences or specific workflows. For example, depending on the zoom level, user intent, type of anatomical structure and clinical protocol the most optimal 3D model viewpoints, texture and inside/outside organ perspective are provided to the end-user.

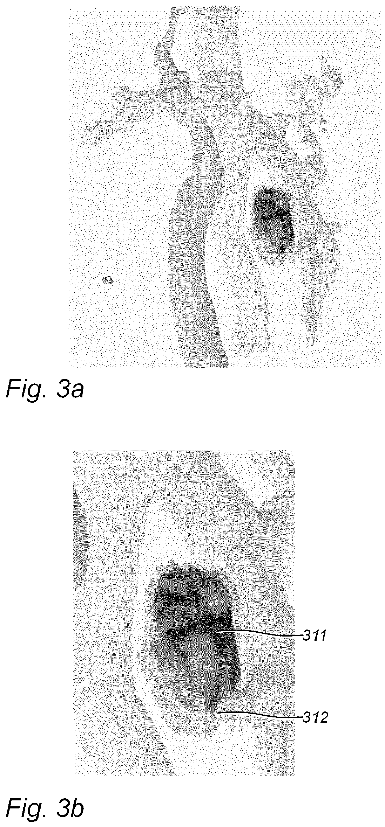

Figs. 3a-3f show screenshots of an embodiment showing a visualization of a 3D model. These figures show an embodiment for surgical planning of pancreatic cancer care. Typically, the main user is the surgeon, intending to first understand the patient-specific anatomy.

In the shown embodiment, for each presentation, the system optimizes the 3D model camera viewpoints, camera position, and zoom level, and the 3D structure visualization. For example, a blood vessel may be solid when looking at the overall low-zoom model, but may be shown as a mesh later in the workflow to facilitate easy assessment of tumor-vessel contact.

A typical workflow may start with a low zoom visualization, e.g., to spot aberrant blood vessels (not shown in the figures). This presentation may be optimized for overall anatomy viewing. The user may then investigate in more detail the tumor and its surrounding blood vessels, possibly including different AI uncertainty scenarios of the tumor segmentation.

Fig. 3a shows a screenshot of an embodiment showing a visualization of a tumor at different certainty thresholds. Fig. 3b is a detail of Fig. 3a. This presentation is optimized for visual tumor-vessel contact search.

Shown is a high certainty part at 311, and a low certainty part at 312. On the display of a prototype the two regions are shown in different shades of yellow to indicate what is tumor and what might also be tumor tissue. Note that two possible scenarios become apparent to the user. The likely segmentation has much less contact with blood vessels, than the less likely segmentation. In an embodiment, only the high certainty part is shown at a low zoom level, and the low certainty part at a higher zoom level.

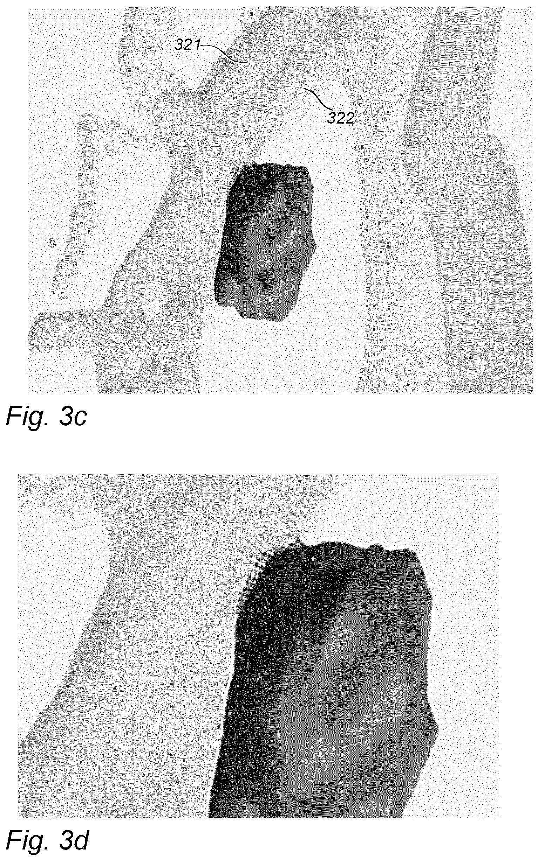

Fig. 3c shows a screenshot of an embodiment showing a visualization of a 3D model. Fig. 3d is a detail of Fig. 3c.

Next the user may investigate in detail possible tumor-vessel contact as this is an important factor in determining patient eligibility for surgery. The location and extent of contact is assessed.

Fig. 3c shows two visibility specifications for blood vessels. Blood vessel 321 is rendered as mesh, while blood vessel 322 running behind blood vessel 321 is rendered solid. The tumor has been rendered solid in a single certainty in this visualization. Blood vessel 321 has been identified as being relevant for the planned surgery as this blood vessel appears to make contact. As the vessel is shown as a mesh, contact is easy to determine visually. In the color version of this image, blood vessel 321 is blue and meshed, the other blood vessels are greyed out, the tumor is yellow.

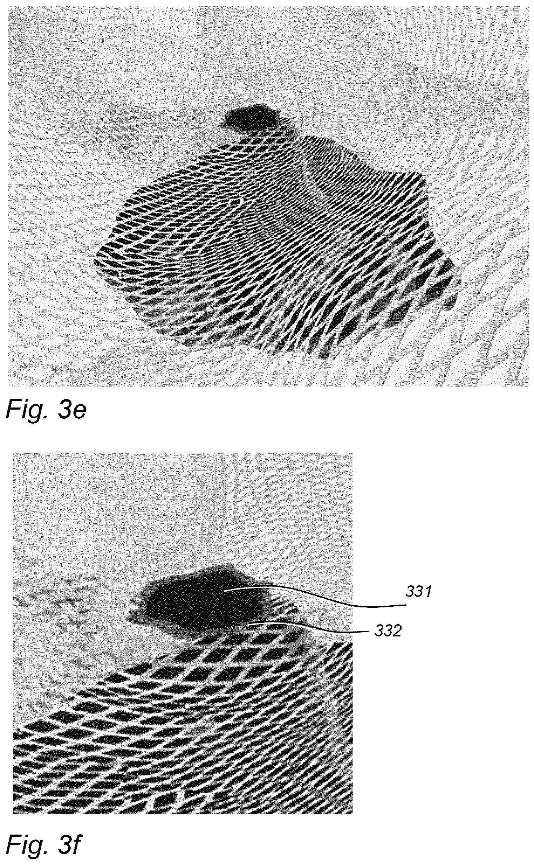

Fig. 3e shows a screenshot of an embodiment showing a visualization of a 3D model. Fig. 3f is a detail of Fig. 3e.

As fourth step in the workflow, a more detailed assessment is done on discriminating tumor-vessel contact versus ingrowth of tumor tissue into the blood vessel. This visualization uses an in-vessel perspective, whiles Figs. 3a-3d are in an out-vessel perspective. The blood vessel is rendered as a mesh, with the tumor beneath it.

The part of the tumor that does not make contact and lies outside the blood vessel is rendered at a single certainty level. The part where the tumor makes contact with the blood vessels is indicated in two uncertainty levels. At 331 the high certainty contact points are shown, at 332 the low certainty contact points. In this visualization only one blood vessel is shown, other blood vessels have been rendered as not visible. This decision was taken on the basis of the zoom level and the perspective type.

This visualization allows a user to assess if a vascular surgeon is needed, might be needed on standby, or is likely not needed. This will impact the surgical planning and strategy.

Note that the viewing angle, rendering styles and the like have been selected automatically based on the perspective and anatomical configuration. The perspective may be obtained from the workflow manager. Without this, a user would need to rotate and translate the 3D image until he/she has the correct orientation. This takes a lot of time. Even if a surgeon were to prefer another perspective, the rules can be adapted for him/her so that a next time images are presented better for him/her as well.

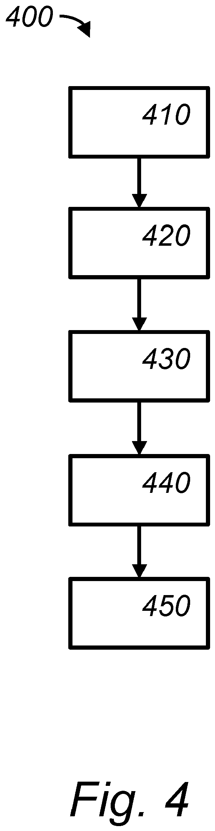

Fig. 4 schematically shows an example of an embodiment of a method enabling surgical planning using a 3D model. The method may be computer-implemented. Method 400 comprises:
- obtaining (410) one or more medical images, identifying multiple anatomic structures in the medical images and generating a 3D model comprising multiple segmented anatomic structures therefrom,
- obtaining (420) surgical planning information comprising at least an anatomic structure of interest,
- obtaining (430) a zoom level for the 3D model,
- determining (440) a visibility specification for displaying the 3D model, the presentation state comprising a rendering mode for the multiple segmented anatomic structures in the 3D model, wherein the rendering mode for the multiple segmented anatomic structures is determined from the anatomic structure of interest and the zoom level,
- displaying (450) the 3D model in a 3D view according to the visibility specification.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 400. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

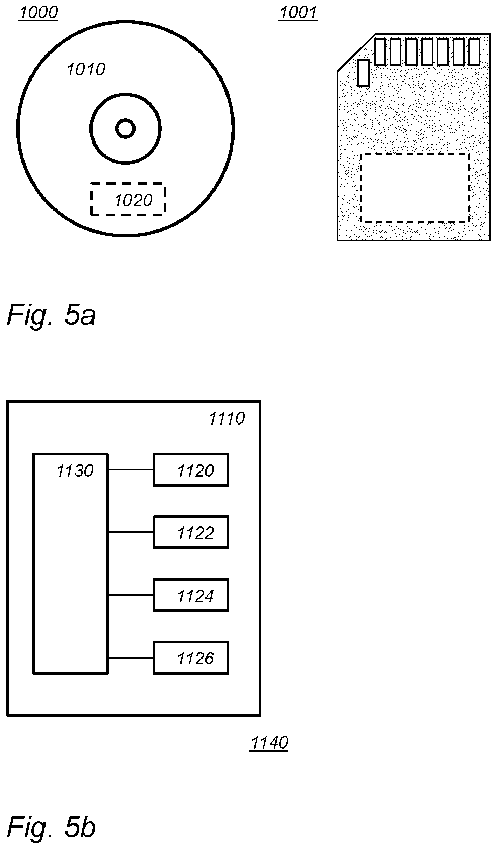

Fig. 5a shows a computer readable medium 1000 having a writable part 1010. Fig. 5a also shows a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method enabling surgical planning. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method of enabling surgical planning.

Fig. 5b shows in a schematic representation of a processor system 1140 according to an embodiment of a system for enabling surgical planning. The processor system comprises one or more integrated circuits 1110. The architecture of the one or more integrated circuits 1110 is schematically shown in Fig. 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., a system for enabling surgical planning may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform steps or subroutines of the methods described herein such that the multiple processors cooperate to achieve the functionality described herein. Further, where the system 1140 is implemented in a cloud computing system, the various hardware components may belong to separate physical systems. For example, processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A method (400) enabling surgical planning using a 3D model, the method comprising
- obtaining (410) one or more medical images, identifying multiple anatomic structures in the medical images and generating a 3D model comprising multiple segmented anatomic structures therefrom,
- obtaining (420) surgical planning information comprising at least an anatomic structure of interest,
- obtaining (430) a zoom level for the 3D model,
- determining (440) a visibility specification for displaying the 3D model, the visibility specification comprising a rendering mode for the multiple segmented anatomic structures in the 3D model, wherein the rendering mode for the multiple segmented anatomic structures is determined from the anatomic structure of interest and the zoom level,
- displaying (450) the 3D model in a 3D view according to the visibility specification.

2. A method as in Claim 1, wherein the visibility specification comprises the visibility of the anatomical structure of interest and/or of contact locations between the anatomical structure of interest and a further anatomical structure, the visibility specification being determined at least from the surgical planning information.

3. A method as in any of the preceding claims, comprising
- determining a viewing angle for the 3D model, the 3D model being rendered according to the viewing angle, and/or
- selecting a perspective, possible perspective including at least in-vessel perspective and an outside-vessel perspective.

4. A method as in any of the preceding claims, wherein a rendering mode for a segmented anatomic structure comprises one or more of the list: structure color, structure texture, structure transparency, inside or outside perspective.

5. A method as in any of the preceding claims, wherein a segmented anatomic structure is a blood vessel, the rendering mode for the blood vessel being solid for a zoom level below a threshold, and non-solid for a zoom level above a threshold.

6. A method as in any of the preceding claims, wherein the zoom level is obtained from a user of the method, and/or from a workflow, the workflow indicating different zoom levels to be applied in a sequence.

7. A method as in any of the preceding claims, wherein pixels in one or more of the segmented anatomical structures have an uncertainty level indicating a likelihood that said pixel is part of the segmented anatomical structure, the rendering mode being different for pixels having uncertainty levels below a threshold and/or above a threshold, in particular wherein pixels having an uncertainty level below the threshold are not shown if the zoom level is below a threshold, but are shown if the zoom level is above the threshold.

8. A method as in any of the preceding claims, comprising
- determining one or more parts of the anatomic structure of interest where the anatomic structure of interest contacts another anatomic structure,
- fitting a plane to a determined part,
- deriving one or more viewing angles from the fitted plane, in particular wherein multiple parts of the anatomic structure of interest are determined where the anatomic structure of interest contacts another anatomic structures, and wherein in particular the method further comprises
- rating the multiple parts for severity, the rating depending at least on the extent of the part,
- selecting a most severe part, and deriving a viewing angle for the selected part.

9. A method as in any of the preceding claims, wherein the generated 3D model integrates anatomical segmentation information from multiple sources, one or more of the multiple sources being selected from the list: imaging technique, scan phase, scan sequence, and algorithms.

10. A method as in any of the preceding claims, wherein enabling surgical planning comprising assessing tumor resectability, and/or vascular involvement, the anatomic structure of interest comprising said tumor and at least part of the multiple anatomic structures are blood vessels and/or wherein the 3D view is displayed in at least one of: an autostereoscopic 3D display, lenticular 3D display, virtual or augmented reality headsets.

11. A method as in any of the preceding claims, wherein the method comprises
- a visibility specification for a low zoom setting having a high visibility of at least part of the anatomical structures, and/or
- a visibility specification for a high zoom setting, wherein at least part of the anatomical structures have reduced visibility to increase visibility of the anatomical structure of interest,
- a visibility specification showing at least two layers with different uncertainty of the anatomic structure of interest, and surrounding anatomical structures, in particular, blood vessels.

12. A method as in any of the preceding claims, wherein the method includes
- generating a video sequence moving from a first visibility specification to a second visibility specification, and causing the video sequence to be displayed when switching from the first visibility specification to the second visibility specification.

13. A method as in any of the preceding claims, wherein
- determining the visibility specification comprises applying a rule set and/or a machine learnable model, wherein the rule set and/or machine learnable model is adaptable to user preference.

14. A display device comprising: one or more processors; and one or more storage devices storing instructions that, when executed by the one or more processors, cause the one or more processors to perform operations for a method according to any of the preceding claims.

15. A transitory or non-transitory computer readable medium (1000) comprising data (1020) representing instructions, which when executed by a processor system, cause the processor system to perform the method according to any of claims 1-13.
